# EUROPÄISCHE PATENTANMELDUNG

(11) **EP 2 233 003 A1**
(43) Veröffentlichungstag der Anmeldung: **29.09.2010**
(21) Anmeldenummer: 09156512.7
(22) Anmeldetag: 27.03.2009
(51) Int. Cl.: A01N 43/707, A01N 47/30, A01N 47/36

(54) **Algizid geschuetzte Putze**

(71) Anmelder: LANXESS Deutschland GmbH, 51369 Leverkusen (DE)
(72) Erfinder: Uhr, Hermann, 51373 Leverkusen (DE); Gerharz, Tanja, 40599 Düsseldorf (DE); Sauer, Frank, 40764 Langenfeld (DE); Koop, Bernd, 50668 Köln (DE)

(57) **Zusammenfassung**

Die vorliegende Erfindung betrifft Putze enthaltend Isoproturon und organische Bindemittel sowie gegebenenfalls weitere Algizide und Fungizide, sowie daraus herstellbare Nassputze und Verputze.

## Beschreibung

Die vorliegende Erfindung betrifft Putze enthaltend Isoproturon und organische Bindemittel sowie gegebenenfalls weitere Algizide und Fungizide, sowie daraus herstellbare Nassputze und Verputze.

3-(4-Isopropylphenyl)-1,1-dimethylharnstoff, üblicherweise und nachstehend auch als Isoproturon bezeichnet, ist als Wirkstoff in der Landwirtschaft zur Bekämpfung von unerwünschtem Unkrautwuchs bereits seit Langem zum Beispiel aus DE-OS 2 039 041 und DE-OS 2 137 992 bekannt.

Des Weiteren ist aus EP 982 995 A bekannt, Isoproturon zum Schutz von Anstrichfarben, Antifoulingfarben und technischen Materialien vor dem Bewuchs durch Algen zu schützen.

In DE-OS 4 433 856 sind Mischungen aus 2-Mercapto-pyridin-N-oxid und algiziden Harnstoffen offenbart, die Gegenstände, welche mit See- oder Brackwasser in Berührung kommen, vor Algenbewuchs schützen.

DE 197 41 403 A beschreibt synergistische Mischungen aus Benzothiophen-2-(N-cyclohexyl)-carboxamid-S,S-dioxid mit Fungiziden und/oder Algiziden als Materialschutzmittel. Hierbei ist Isoproturon als möglicher Mischungspartner genannt.

Konzentrate zum Schutz von Beschichtungssystemen aus Chlorthalonil und Triazolen, und/oder Isothiazolinonen und gegebenenfalls algizid wirksamen Harnstoffen, wie zum Beispiel Isoproturon, sind in WO 2007131735 beschrieben. Unter Beschichtungssystemen werden hierbei Farben, Putze und Lacke verstanden.

WO 2009/000650 beschreibt eine partikuläre, polymere Matrix bestehend aus thermoplastischen Polymeren und bioziden Wirkstoffen. Sie dient zum Schutz von technischen Materialien vor dem Befall mit Mikroorganismen wie Algen, Pilzen und, Bakterien.

Des Weiteren werden in EP 1 987 716 A spezielle, hoch konzentrierte Dispersionskonzentrate beschrieben, die durch Polyacrylat-Pfropf-Copolymere mit Polyethylenglycol-Seitenketten und Formulierhilfsmitteln auf Basis von Tristyrylphenolethoxylatphosphorsäureester oder entsprechenden Salzen stabilisiert sind. Sie sollen zur Ausrüstung diverser Materialschutzmittel dienen.

Unter Verputzen werden im Rahmen der Erfindung und im Allgemeinen mörtelgleiche oder -artige Beschichtungen verstanden, die an Außen- und Innenwänden, wie auch Decken angebracht werden.

Solche Verputze werden typischerweise aus Nassputzen, und diese gegebenenfalls aus im Wesentlichen wasserfreien Putzen hergestellt.

Je nach Einsatzart erfüllen Putze bzw. Verputze verschiedene Zwecke, z.B. Herstellung eines glatten Untergrundes zum Fliesen, Streichen oder Tapezieren, Regulierung der Raumfeuchte bei Innenverputzen und Wasserabweisung bei Außenverputzen und die Herstellung eines ästhetischen Erscheinungsbildes.

Von der Anwendung unterscheidet man Grundverputz, der in der Regel direkt auf das Mauerwerk aufgebracht ist, Unebenheiten ausgleicht und eine feste Grundlage bildet und Oberverputz, der in relativ dünnen Schichten auf den Grundverputz aufgetragen ist.

Putze können aus vielerlei Materialien bestehen, prinzipiell aber immer aus einem Bindemittel, Zuschlagsstoffen und Wasser. Die verschiedenen Putze werden meist nach ihren Materialien unterschieden. Weil der Einfluss der Bindemittel die Eigenschaften des Putzes am meisten beeinflusst, dient es auch als das hauptsächliche Unterscheidungskriterium. Nach dem Bindemittel unterscheidet man mineralische Putze und Kunstharzputze. Mineralische Putze haben anorganische Bindemittel, besonders Kalk und Zement, aber auch Gips (für Innenräume) oder Lehm (als klassische Version). Kunstharzputze haben organische Bindemittel.

Aufgrund ihrer deutlich besseren Verarbeitbarkeit haben Putze enthaltend organische Bindemittel bzw. sogenannte Kunstharzputze in den letzten Jahren zunehmend an Bedeutung gewonnen.

Auch in Wärmedämmverbundsystemen (WDVS) werden Kunstharzputze bevorzugt eingesetzt. Da in diesen Systemen aber die Verputzschichten vom Gebäude (Wand) thermisch entkoppelt sind, ist die Temperatur in diesen Systemen niedriger, was zu erhöhter Kondensation von Wasser führt. Aufgrund der hierdurch höheren Feuchtigkeit im Verputz hat sich auch der Pilz- und Algenbefall in den letzten Jahren stark erhöht. Dieses ist sowohl aus ästhetischen Gründen, wie auch aus Gründen der Putzintegrität nicht erwünscht.

Vor dem bekannten Stand der Technik ergab sich nun die Aufgabe, Putze und Nassputze enthaltend organische Bindemittel bereitzustellen, mit denen Verputze hergestellt werden können, die weniger anfällig für den Befall mit Pilzen und Algen sind als bislang verwendete Systeme.

Es wurden nun Putze enthaltend organische Bindemittel und Isoproturon gefunden.

Der Gewichtsanteil von Isoproturon in den erfindungsgemäßen Putzen kann in einem sehr breiten Bereich variieren und hängt neben der Anwendung auch von der jeweiligen Rezeptur ab. Die optimale Einsatzmenge kann für das jeweilige Einsatz- und Anwendungsgebiet in einer dem Fachmann hinlänglich bekannten Weise durch Testreihen ermittelt werden.

Im Allgemeinen liegt der Gewichtsanteil von Isoproturon in den erfindungsgemäßen Putzen im Bereich von 0,001 bis 3 Gew.-%, vorzugsweise von 0,01 bis 1,0 Gew.-% und besonders bevorzugt 0,01 bis 0,25 Gew.-% bezogen auf das Trockengewicht des Putzes.

Der Begriff "Trockengewicht des Putzes" soll sich auf einen im Wesentlichen wasserfreien Putz beziehen, wobei im Wesentlichen wasserfrei einen Wassergehalt von weniger als 5% Gew.-%, bevorzugt 2 Gew.-% oder weniger bedeuten soll.

Die erfindungsgemäßen Putze enthaltend organische Bindemittel und Isoproturon können entweder keine weiteren oder zumindest einen weiteren bioziden Wirkstoff enthalten.

Insbesondere können die erfindungsgemäßen Putze zumindest einen weiteren bioziden Wirkstoff enthalten, wobei die bioziden Wirkstoffe Algizide, Fungizide oder Bakterizide sind.

Bevorzugte Algizide sind Triazinverbindungen, wie beispielsweise Terbutryn, Cybutryn, Propazin oder Terbuton; Harnstoffverbindungen, wie beispielsweise Diuron, Benzthiazuron, Methabenzthiazuron und Tebuthiuron oder Uracile, wie beispielsweise Terbacil oder Dichlor-N-octylisothiazolinon, wobei letztere Verbindung gleichzeitig fungizide und algizide Wirkung aufweist.

In einer Ausführungsform der Erfindung enthalten die erfindungsgemäßen Putze keine weiteren Algizide, oder zumindest ein weiteres Algizid, wobei das Algizid oder die Algizide bevorzugt aus den vorgenannten Algiziden ausgewählt sind.

Bevorzugte Fungizide sind Azaconazol, Bromuconazol, Cyproconazol, Dichlobutrazol, Diniconazol, Hexaconazol, Metaconazol, Penconazol, Propiconazol, Tebuconazol, Methfuroxam, Carboxin, Fenpiclonil, Butenafin, Imazalil, N-Octylisothiazolin-3-on, Dichlor-N-octylisothiazolinon, Mercaptobenzthiazol, Thiocyanatomethyl-thiobenzothiazol, Thiabendazol, N-Butyl-benzisothiazolinon" 1-Hydroxy-2-pyridinthion sowie ihr**e Cu-**, Na-, Fe-, **Mn-,** Zn-Salze; Tetrachlor-4-methylsulfonylpyridin, 3-Iod-2-propinyl-n-butylcarbamat, Bethoxazin, 2,4,5,6-Tetrachlorophthalodinitril, Triadimefon und Carbendazim.

In einer Ausführungsform der Erfindung enthalten die erfindungsgemäßen Putze keine weiteren Fungizide, oder zumindest ein weiteres Fungizid, wobei das Fungizid oder die Fungizide bevorzugt aus den vorgenannten Fungiziden ausgewählt sind.

Bevorzugte Bakterizide sind: N-Methyl-isothiazolin-3-on, 5-Chlor-N-methylisothiazolin-3-on, 1,2-Benzisothiazol-3(2H)-on, Glutaraldehyd, Na-Pyrithion, 2-Brom-2-nitro-1,3-propandiol, o-Phthaldialdehyd, 2,2-Dibrom-3-nitril-propionamid, 1,2-Dibrom-2,4-dicyanobut a n , p-Hydroxybenzoesäure, Chlorophen, 3-Methyl-4-chlorphenol, o-Phenylphenol, Benzalkoniumchlorid, Benzyldimethyltetradecylammoniumchlorid, Benzyldimethyldodecylammoniumchlorid, Dichlorbenzyldimethylalkylammoniumc**hlorid, Didecy** ldimethylammoniumchlorid, Dioctyldimethylammoniumchlorid, N-Hexadecyltrimethylammoniumchlorid, Formaldehyd oder Formadehyddepotstoffe wie N-(2-Hydroxypropyl)-amino-methanol, Benzylalkohol-(hemi)-formal, N-Methylolchloracetamid, 1,3-Bis(hydroxymethyl)-5,5-dimethylimidazolidine-2,4-dione (DMDMH), Tetramethylol-acetylen-diharnstoff (TMAD), Ethylenglycol-hemiformal, Ethylenglycol-bishemiformal, Hexahydro-s-**trianzin,** 7-Ethylbicyclooxazolidine, 3,3'-Methylene-[5-methylbisozazolidine], Dimethylolharnstoff, Methylenbismorpholin, Natrium N-(Hydroxymethyl)glycinat.

In einer Ausführungsform der Erfindung enthalten die erfindungsgemäßen Putze keine weiteren Bakterizide, oder zumindest ein weiteres Bakterizid, wobei das Bakterizid oder die Bakterizide bevorzugt aus den vorgenannten Bakteriziden ausgewählt sind.

In einer bevorzugten Ausführungsform von Nassputzen enthalten die erfindungsgemäßen Nassputze zumindest ein Bakterizid oder zumindest zwei Bakterizide, wobei das Bakterizid oder die Bakterizide bevorzugt aus den vorgenannten Bakteriziden ausgewählt sind.

Das Bakterizid oder die Bakterizide können typischerweise in Form von hinlänglich bekannten Gebindekonservierungsmitteln eingebracht werden.

Im Allgemeinen liegt der Gesamtgehalt an bioziden Wirkstoffen in den erfindungsgemäßen Putzen im Bereich von 0,001 bis 3 Gew.-%, vorzugsweise von 0,05 bis 1,5 Gew.-%, bezogen auf das Trockengewicht des Putzes.

Organische Bindemittel im Sinne der Erfindung sind alle üblichen, organischen Bindemittel und Bindemittelmischungen.

Bevorzugte organische Bindemittel sind Kunststoffdispersionen, wie beispielsweise Kunststoffdispersionen enthaltend alternativ oder in Mischung: folgende Polymere EthylenVinylacetat-Acrylat, Vinylacetat-Vinylchlorid-Ethylen, Styrol-Acrylat, Reinacrylate, Polyvinylacetat Homopolymere, Vinylacetat-Vinylchlorid-Ethylen-Acrylat, Polyacrylsäureester, Styrol-Butadien-Copolymere, Butylacrylat-Styrol Copolymere, Vinylacetat-Homopolymere, Polyurethan-Hybride, Reinacrylate, Copolymere aus Ethylen, Acrylsäure, Methacrylsäure, Acrylsäure und/oder Acrylsäureestern.

Weitere bevorzugte organische Bindemittel sind Silikondispersionen, wie beispielsweise solche die Polysiloxane enthalten.

Die organischen Bindemittel können jeweils allein oder in beliebigen Kombinationen eingesetzt werden.

Die Konzentration der Bindemittel und Bindemittelkombinationen kann im Allgemeinen in einem sehr weiten Bereich variieren und hängt von den jeweils zu erreichenden technischen Eigenschaften der Putze ab.

Bevorzugt enthalten die erfindungsgemäßen Putze 0,5 bis 30 Gew. %, besonders bevorzugt 1 bis 20 Gew. % an organischen Bindemitteln bezogen auf das Trockengewicht des Putzes.

Die erfindungsgemäßen Putze können gegebenenfalls weiterhin anorganische Binder enthalten. Anorganische Binder sind beispielsweise Zement, Gips, Kalk und lösliche Alkalisilikate, wie Wasserglas. Der Gewichtsanteil kann in weitem Bereich variieren und hängt ebenfalls von den zu erreichenden mechanischen Eigenschaften ab.

Die erfindungsgemäßen Putze können gegebenenfalls weiterhin anorganische Füllstoffe und Zuschläge, Füllkörper, Hart- und Leichtzuschläge, Rheologieadditive, Hydrophobierungsmittel, Dispergierhilfsmittel und Pigmente enthalten.

Anorganische Füllstoffe sind beispielsweise Tonmehle, Bentonite, Glimmer, Kaoline, Barytmehle, Leichtfüllstoff, Calciumcarbonat, Talkum, Titandioxid, Aluminiumhydroxid, Kaolin, Kaliglimmer, Schiefermehl, Marmormehl, Talkum, Schwerspat, Anhydrit, Calciumsulfatdihydrat, Eisenpulver, Stahlpulver, Magnesiumcarbonat, Magnesiumhydroxid, Magnesiumoxid, Magnesit, Quarzsand, Brechsand, Splitt/Splittgemisch, Edelsplitt, Quarzmehle, Kalksteinkörnungen, Kalksteinmehl, Marmor, Granit, Porphyr, Calcit oder Dolomit, Schwer- und Flussspat.

Füllkörper sind beispielsweise alkalibeständige Glasfasern, Carbonfasern, Cellulosefasern, Cellulosepulver, Edelstahlfasern, Calciumsilikatfasern, Polypropylenfasern, Polyamid-, Polyester-, Polyacrylnitril-, Polyvinylalkoholfasern oder Kohlenstoff-Fasern.

Anorganische Zuschläge sind beispielsweise Dolomit, Dolomithydrat, Kalkmilch, Kalkstein, Dolomitstein, Weißfeinkalk, Weißstückkalk, Branntkalk, Weißkalkhydrat, Kalkmilch, Sumpfkalk, Trasskalke oder Fließkalk.

Hartzuschläge sind beispielsweise Siliciumcarbide, Korund, metallische Hartstoffe, Andalusit oder Titancarbid.

Leichtzuschläge sind beispielsweise Blähton, Blähschiefer, Perlite, Vermiculite, Bims, Blähglas, Kesselsand, Schaumglas oder Polystyrol-Perlen.

Dispergierhilfsmittel und Netzmittel sind alle oberflächenaktiven Verbindungen, die eine gleichmäßige Verteilung und Einarbeitung der Putzbestandteile unterstützen. Bevorzugte Dispergierhilfsmittel und Netzmittel sind zum Beispiel nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate, Ligninsulfitablaugen, Acrylate und Methylcellulose.

Entschäumer sind beispielsweise Entschäumer, die sich von natürlichen Fetten und Ölen, Petroleum-Derivaten oder Siliconölen ableiten.

Rheologieadditive sind alle Stoffe, mit denen man die Rheologie des Putzes hinsichtlich einer besseren Verarbeitbarkeit verbessern kann. Bevorzugte Rheologieadditive sind beispielsweise Xanthan Gum, Natrium Carageenan, Natrium Alginat, Hydroxypropyl Guar, Gummi Arabicum, Polyacrylate, Carboxymethylcellulose, Hydroxyalkylcellulose wie zum Beispiel Hydroxyethyl-, Hydroxypropyl-, Hydroxypropylmethyl- und Methyl- Cellulose, Bentonite, Magnesium-AluminiumSilikate, Kaoline und gegebenenfalls hydrophobierte Kaoline.

Zur Reduzierung der kapillaren Wasseraufnahme, bei gleichzeitigem Erhalt der Wasserdampfdurchlässigkeit werden sogenannte Hydrophobiermittel eingesetzt. Hydrophobierungsmittel sind beispielsweise Metallseifen wie Zinkstearat, Magnesiumstearat, Aluminiumstearat, Natriumoleat; Silane; alkylierte Siloxane, Siliconharze; Silicon-Mikroemulsionen; Siliconate und Fettsäuren.

Zur Einfärbung der Putze können Farbstoffe wie anorganische Pigmente eingesetzt werden. Beispiele dafür umfassen Eisenoxid, Titandioxid, Ferrocyanblau und organische Farbstoffe, wie Alizarin-, Azo- und Metallphthalocyaninfarbstoffe.

Die erfindungsgemäßen Putze können in an sich bekannter Weise beispielsweise durch Mischung der Einzelkomponenten erhalten werden. Hierzu können übliche Mischer eingesetzt werden.

Von der Erfindung sind weiterhin Nassputze enthaltend 5 bis 80 Gew.-%, vorzugsweise 5 bis 35 Gew.-% Wasser und 20 bis 95 %, bevorzugt 65 bis 95 % der erfindungsgemäßen Putze umfasst, wobei der Gesamtgehalt von Wasser und den erfindungsgemäßen Putzen in den Nassputzen 90 Gew.-% oder mehr, vorzugsweise 95 Gew.-% oder mehr und besonders bevorzugt 98 Gew.-% oder mehr beträgt.

Solche Nassputze werden häufig auch als gebrauchsfertige Putze bezeichnet.

Zur Herstellung der erfindungsgemäßen Nassputze aus den erfindungsgemäßen Putzen können übliche Mischaggregate und Kneter verwendet werden.

Die erfindungsgemäßen Putze und Nassputze werden vorzugsweise in einem Verfahren zur Herstellung von Verputzen auf Innen- und Außenoberflächen von Infrastrukturelementen, wie beispielsweise Gebäuden und Verkehrsflächen verwendet. Die Verarbeitung der Putze und Nassputze kann dabei in an sich bekannter Weise erfolgen.

Von der Erfindung sind weiterhin auch Verputze umfasst, die aus den erfindungsgemäßen Putzen und Nassputzen in üblicher Weise erhältlich sind, sowie Infrastrukturelemente enthaltend vorgenannte Verputze.

Von der Erfindung ist weiterhin ein Verfahren zur Bekämpfung von Mikroorganismen, wie insbesondere Algen, in und auf Verputzen enthaltend organische Bindemittel umfasst, das dadurch gerkennzeichnet ist, dass den zur Herstellung der Verputze erforderlichen Putzen oder Nassputzen Isoproturon zugesetzt wird.

Bei Algen handelt es sich vorzugsweise um prokaryotische Algen (Cyanophyta/Blaualgen) wie z.B. Vertreter aus der Unterklasse Coccogoneae und der Unterklasse Hormogoneae.

Beispielhaft seien aus der Ordnung Chroococcales Arten der Gattungen Synechococcus, Chroococcus, Gloeocapsa, Aphanocapsa, Aphanothece, Microcystis und Merismopedia; aus den Ordnungen Chamaesiphonales und Pleurocapsales Arten der Gattungen Chamaesiphon und Dermatocarpa; aus der Ordnung Oscillatoriales Arten der Gattungen Phormidium, Schizothrix, Spirulina, Plectonema und Lyngbya; aus der Ordnung Nostocales Arten der Gattungen Nostoc, Rivularia, Tolypothrix, Scytonema, Anabaenopsis, Calothrix und Aulosira; aus der Ordnung Stigonematatles Arten der Gattungen Stigonema, Fischerella, Hapalosiphon und Mastigocladus genannt.

Ferner zeigen die Verbindungen auch eine gute Wirksamkeit gegen eukaryotische Vertreter aus den Abteilungen Heterokontophyta, Rhodophyta, Chlorophyta, Euglenophyta, Cryptophyta, Dinophyta und Haptophyta.

Beispielhaft seien aus der Klasse Xanthophyceae Arten der Gattungen Tribonema und Vaucheria; aus der Klasse Chrysophyceae Arten der Gattungen Chrysocapsa, Rhizochrysis, Cfhrysosphaera, Phaeothamnion und Thallochrysis; aus der Klasse Phaeophyceae (Braunalgen) Arten der Gattungen Ectocarpus, Pylaiella, Cutleria, Zanardinia, Dictyota, Padina, Dictyopteris, Laminaria, Macrocystis, Lessonia, Nerocystis, Chorda, Alaria, Fucus, Ascophyllum, Himanthalia, Sargassum, Cystoseira, Halidrys, Pelvetia, Coccophora und Durvilla; aus der Klasse Rhodophyceae (Rotalgen) Arten der Gattungen Porphyridum, Bangia, Porphyra, Corallina, Lithothamnia, Lithophyllum, Rhodymania, Delesseria, Grinnellia, Platysiphonia, Polysiphonia, Ceramium, Plumaria, aus der Klasse Chlorophyceae (Grünalgen) Arten der Gattungen Chlorococcum, Chlorella, Spongiochloris, Monostroma, Ulva, Enteromorpha, Ulothrix, Trentepohlia, Apatococcus, Desmococcus, Cladophora, Siphonocladus, Valonia, Caulerpa, Bryopsis, Acetabularia, Halimeda und Tuna genannt.

Durch den zusätzlichen Einsatz von Fungiziden erreicht man beispielsweise auch eine Wirkung gegen:
Alternaria, wie Alternaria tenuis, Aspergillus, wie Aspergillus niger, Chaetomium, wie Chaetomium globosum, Coniophora, wie Coniophora puetana, Lentinus, wie Lentinus tigrinus, Penicillium, wie Penicillium glaucum, Polyporus, wie Polyporus versicolor, Aureobasidium, wie Aureobasidium pullulans, Sclerophoma, wie Sclerophoma pityophila, Trichoderma, wie Trichoderma viride.

Von der Erfindung ist Weiterhin die Verwendung von Isoproturon in Putzen, Nassputzen und Verputzen enthaltend organische Bindemittel umfasst.

Die erfindungsgemäßen Putze und Nassputze sind vor allem deswegen als deutliche Verbesserung gegenüber dem Stand der Technik zu betrachten, weil sie die leichtere Verarbeitbarkeit mit einem hervorragenden Schutz gegen Algen und Pilze vereinigen.

Es wurde weiterhin gefunden, dass Isoproturon aus den erfindungsgemäßen Verputzen durch Niederschlag und andere Einwirkungsformen von Wasser deutlich weniger ausgewaschen ("geleacht") wird, als aus den bislang bekannten im Wesentlichen mineralischen Verputzen, was zum einen eine lange Wirksamkeit garantiert und zum anderen signifikante, ökologische Vorteile mit sich bringt.

Nachfolgende Beispiele sollen die Erfindung veranschaulichen ohne sie jedoch darauf zu beschränken.

### Beispiele:

### Durchführung eines Agardiffusionstest mit Putzmustern im Hinblick auf Bewuchs durch Algen

### 1) Herstellung der Prüflinge

Handelsübliche, nicht algizid ausgerüstete Putze wurden mit der in Tabelle 1 angegebenen Menge an Isoproturon (als Lösung in möglichst wenig Dimethylsulfoxid (DMSO) versetzt und durch Rühren homogenisiert.

Zunächst wurde eine Universalgrundierung mit 0,25 l/m² (Weber.Prim 403 / Saint-Gobain Weber GmbH, Clevischer Ring 127, D-51063 Köln) auf das Trägermaterial (mattes Feinstpapier in DIN A4 Größe (300g/qm) in einer Schichtdicke von etwa 0,2 mm aufgetragen und einen Tag getrocknet.

Danach wurden 200 g eines ausgerüsteten Nassputzes einseitig auf das grundierte Papier mit dem Spatel aufgezogen.

Die Proben wurden dann 10 Tage austrocknen gelassen bevor gegebenenfalls weitere Alterungsprozesse durchgeführt wurden.

### 2) Alterung

Um praxisnahe Ergebnisse zu erhalten, wurde ein Teil der Prüflinge vor dem mikrobiologischen Test mit fließendem Wasser (6 L/h, bei 20°C) für 24 h und 72 h ausgelaugt.

Die gealterten Proben, sowie die Proben ohne Belastung wurden vor dem Agardiffusionstest (AD-Test) mit γ-Strahlen sterilisiert um verfälschender Fremdverkeimung vorzubeugen.

### 3) AD-Test auf Algenbefall

Die vorbereiteten Prüflinge wurden daraufhin auf einen geeigneten Agar-Nährboden (Allen's Agar) aufgelegt. Das Medium setzte sich wie folgt zusammen:

| **Inhaltsstoffe** | **Formel** | **mg / L** |
|---|---|---|
| Ammoniumchlorid | NH₄Cl | 50 |
| Natriumnitrat | NaNO₃ | 1000 |
| Calciumchlorid Dihydrat | CaCl₂ x 2 H₂O | 50 |
| Magnesiumsulfat Heptahydrat | MgSO₄ x 7 H₂O | 500 |
| Dikaliumhydrogenphosphat | K₂HPO₄ | 250 |
| Eisen(III)-chlorid Hexahydrat | FeCl₃ x 6 H₂O | 5 |

Außerdem wurden 15 g/L Agar zugesetzt. Das Medium wurde autoklaviert (121°C, 15 min). Die Prüflinge, wie auch der Nährboden wurden mit einer definierten Algenmischung kontaminiert.

Nach 4 wöchiger Inkubation bei 20°C, ≥ 50% rel. Luftfeuchte und 1000 - 5000 LUX 12h/Tag wurde der Test bewertet.

Ein Verputz wird dann als dauerhaft algenfest bezeichnet, wenn sie kein Algenwachstum oder nur sehr geringen Randbefall aufweist.

### 4) Mikroorganismen

Zur Kontamination wurden folgende Algenkulturen verwendet, von denen bekannt ist, dass diese Putze befallen oder häufig auf Fassaden, insbesondere Fassaden, die mit einem Putz versehen sind, anzutreffen sind:
- Phormidium spec.
- Oscillatoria tenuis
- Chlorella vulgaris
- Scenedesmus communis

Die Ergebnisse der AD-Tests auf Algenbefall sind in Tabelle 1 wiedergegeben

**Tabelle 1:**

| Beispiel Nr. | Putz | Konzentration Isoproturon [Gew.-%] (Fertigproduk)t | Alterung | Ergebnis |
|---|---|---|---|---|
| 1 | Kunstharz-Scheibenputz Weber.Pas 431 | 0,00 | Keine Alterung | 3 |
| | | | 24 h Wässerung | 3 |
| | | | 72 h Wässerung | 3 |
| 2 | Kunstharz-Scheibenputz Weber.Pas 431 | 0,08 | Keine Alterung | 0 |
| | | | 24 h Wässerung | 0 |
| | | | 72 h Wässerung | 0 |
| 3 | Kunstharz-Scheibenputz Weber.Pas 431 | 0,10 | Keine Alterung | 0 |
| | | | 24 h Wässerung | 0 |
| | | | 72 h Wässerung | 0 |
| 4 | Siliconharz-Scheibenputz Weber.Pas 481 | 0,00 | Keine Alterung | 3 |
| | | | 24 h Wässerung | 3 |
| | | | 72 h Wässerung | 3 |
| 5 | Siliconharz-Scheibenputz Weber.Pas 481 | 0,08 | Keine Alterung | 0 |
| | | | 24 h Wässerung | 0 |
| | | | 72 h Wässerung | 0 |
| 6 | Siliconharz-Scheibenputz Weber.Pas 481 | 0,10 | Keine Alterung | 0 |
| | | | 24 h Wässerung | 0 |
| | | | 72 h Wässerung | 0 |

### Legende Bewertung:

0 = Verputz nicht mit Algen bewachsen; 1 = Verputz <10 % bewachsen, 2 = Verputz 10 bis <25 % bewachsen, 3 = Verputz 25 bis <50 % bewachsen, 4 = Verputz 50 bis <75 % bewachsen, 5 = Verputz 75 bis 100% bewachsen.

## Patentansprüche

1. Putze enthaltend organische Bindemittel und Isoproturon.

2. Putze nach Anspruch 1, **dadurch gekennzeichnet, dass** der Gewichtsanteil von Isoproturon im Bereich von 0,001 bis 3 Gew. bezogen auf das Trockengewicht des Putzes liegt.

3. Putze nach Anspruch 1 oder 2, **dadurch gekennzeichnet, dass** sie zumindest einen weiteren bioziden Wirkstoff enthalten.

4. Putze nach Anspruch 3, **dadurch gekennzeichnet, dass** sie zumindest ein weiteres Algizid enthalten, die ausgewählt sind aus der Gruppe der Triazinverbindungen, Harnstoffverbindungen, Uracile und Dichlor-N-octylisothiazolinon.

5. Putze nach Anspruch 3 oder 4, **dadurch gekennzeichnet, dass** sie zumindest ein Fungizid als weiteren bioziden Wirkstoff enthalten.

6. Putze nach einem der Ansprüche 3 bis 5, **dadurch gekennzeichnet, dass** sie zumindest ein Bakterizid als weiteren bioziden Wirkstoff enthalten.

7. Putze nach einem der Ansprüche 1 bis 6, **dadurch gekennzeichnet, dass** sie als organische Bindemittel Kunststoffdispersionen oder Silikondispersionen enthalten.

8. Nassputze enthaltend 5 bis 80 Gew.-% Wasser und 20 bis 95 % an Putzen gemäß einem der Ansprüche 1 bis 7, wobei der Gesamtgehalt von Wasser und Putzen in den Nassputzen 90 Gew.-% oder mehr beträgt.

9. Verputze erhältlich durch übliche Verarbeitung von Putzen oder Nassputzen gemäß einem der Ansprüche 1 bis 8.

10. Infrastrukturelement enthaltend einen Verputz nach Anspruch 9.

11. Verfahren zur Bekämpfung von Mikroorganismen in und auf Verputzen enthaltend organische Bindemittel, **dadurch gekennzeichnet, dass** den zur Herstellung der Verputze erforderlichen Putzen oder Nassputzen Isoproturon zugesetzt wird.

12. Verwendung von Isoproturon in Putzen, Nassputzen und Verputzen enthaltend organische Bindemittel.
